# EUROPEAN PATENT SPECIFICATION

(11) **EP 2 081 795 B1**
(45) Date of publication and mention of the grant of the patent: **14.09.2011**
(21) Application number: 07839365.9
(22) Date of filing: 09.10.2007
(51) Int. Cl.: B60P 7/12, B61D 3/16, B62D 63/06, B60P 1/02

(54) **TRANSPORT TRAILER AND METHOD**
TRANSPORTANHÄNGER UND ENTSPRECHENDES VERFAHREN
REMORQUE DE TRANSPORT, ET PROCEDE

(30) Priority: 17.10.2006 US 581919; 03.10.2007 US 866802
(43) Date of publication of application: 29.07.2009
(73) Proprietor: Cook, Mark E., Lufkin TX 75901 (US)
(72) Inventor: Cook, Mark E., Lufkin TX 75901 (US)
(74) Representative: Parry, Simon James
(86) International application number: PCT/US2007/021543
(87) International publication number: WO 2008/048437

(56) References cited:
- DE-A1- 19 924 889
- DE-U1- 29 713 174
- US-A- 3 352 594
- US-A- 4 009 790
- US-A- 4 875 811
- US-A- 5 083 892
- US-A- 5 158 066
- US-A- 5 283 934
- US-A- 5 401 137
- US-B2- 6 467 586
- US-B2- 6 814 214
- US-B2- 6 814 214

## Description

### FIELD OF THE INVENTION

The present invention relates to trailers of the type conventionally used for transporting objects, including trailers removably connected to or integral with a powered operator cab. More particularly, this invention relates to an improved trailer for reducing injury to transport personnel. In one embodiment, the trailer may be used to transport tires which are supported on storage racks.

### BACKGROUND OF THE INVENTION

Various types of trailers have been devised to transport objects, and trailers have been specifically designed for transporting one type of object. Nevertheless, a considerable time and money are incurred in loading and unloading selected ones of the transported objects at a specific location. Moreover, trailer workers are commonly injured when loading and unloading objects from a trailer, particularly when the objects are heavy and/or bulky.

U.S. Patent 6,814,214 discloses a unitary trailer and powered operator cab. The trailer includes a pallet and conveyor system for loading pallets onto the vehicle, with the pallets movable in an elongate loop with front and rear ends of the loop rotating about an axis parallel to the vehicle's axis.

Various types of patents disclose systems for generally transporting tires.

U.S. Patent 5,927,931 discloses a lift for raising and lowering a stack of tires.

U.S. Patents 5,027,991 and 5,356,163 each disclose structures for transporting a single tire. U.S. Patent 6,382,644 discloses a transport and a tire and wheel assembly. A device referred to as the Tire Butler being promoted by Mobile Concepts, Inc. uses a trailer for transporting tires. Publication 2001/0028838 and U.S. Patent 6,527,499 also disclose equipment for handling and transporting tires.

U.S. Patent 5,823,558 discloses a trailer loading support. A load distribution system for trucks is disclosed in U.S. Patent 6,157,889. Publication 2003/0226470 discloses a rail transport system for bulk materials.

U.S. Patent 5,186,066 discloses a barbecue oven having a plurality of cooking baskets mounted for rotation around a horizontal axis.

DE 29713174U1 discloses a method of collecting and disposing of food waste and an associated vehicle.

The disadvantages of the prior art are overcome by the present invention, and an improved trailer and method are hereinafter disclosed.

### SUMMARY OF THE INVENTION

In one embodiment, a trailer for transporting objects includes a trailer frame having a central axis spaced between left-side and right-side rear wheels, and a plurality of storage units supported on the trailer frame, with each supporting unit for supporting a plurality of objects thereon and having a storage support axis substantially parallel to the trailer frame central axis. A carriage is provided for rotatably supporting the plurality of storage units about a carriage axis substantially parallel with the trailer central axis. A powered carriage rotator is provided for rotating the plurality of supports about a carriage axis. A powered brake is also provided for prohibiting rotation of the plurality of supports when power is not applied to the carriage rotator.

In another embodiment, a powered restrictor is provided for limiting axial movement of a carriage support during transit of the trailer. In a preferred embodiment, a powered restrictor may be provided for each of the plurality of carriage supports. In another embodiment, a divider slidable along the pair of elongate support members for maintaining the transported goods in a substantially upright position.

These and further features and advantages of the present invention will become apparent from the following detailed description, wherein reference is made to the figures in the accompanying drawings.

### BRIEF DESCRIPTION OF THE DRAWINGS

Figure 1 is a side view of a suitable trailer and powered operator cab with the side.doors raised.
Figure 2 is a rear view of the trailer shown in Figure 1, with the side doors raised.
Figure 3 is a top view of the trailer shown in Figure 1, with the side doors closed and the operator cab removed.
Figure 4 is a pictorial view of a portion of the trailer shown in Figure 1.
Figure 5 illustrates a portion of the carriage assembly.
Figure 6 illustrates an upper end of a lifting cylinder and a lifting plate for raising and lowering the carriage assembly.
Figure 7 illustrates another view of a rotatable lifting cylinder and lifting plate.
Figure 8 illustrates a portion of a suitable tray supported on the carriage assembly for holding boxes or other goods.
Figure 9 illustrates a preferred drive motor for rotating the carriage and for prohibiting rotation when power is not applied to the motor.
Figure 10 illustrates a portion of a carriage assembly with a spring biased electric brake for minimizing axial movement of a storage rack.
Figure 11 illustrates a slidable, divider for maintaining the transported goods in a substantially upright position on the storage rack.

### DETAILED DESCRIPTION OF PREFERRED EMBODIMENTS

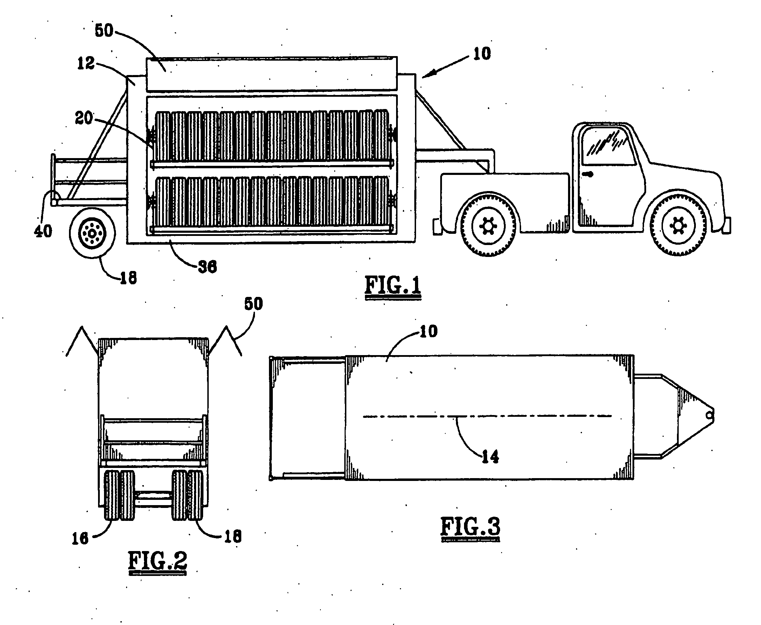

Figure 1 discloses one embodiment of a trailer 10 for transporting tires. For the depicted embodiment, a powered operator cab may be used to transport the trailer removable from the cab, or the trailer may be integral with the frame of the powered transport cab. In the latter case, the combination of a trailer and a cab is generally referred to as a truck.

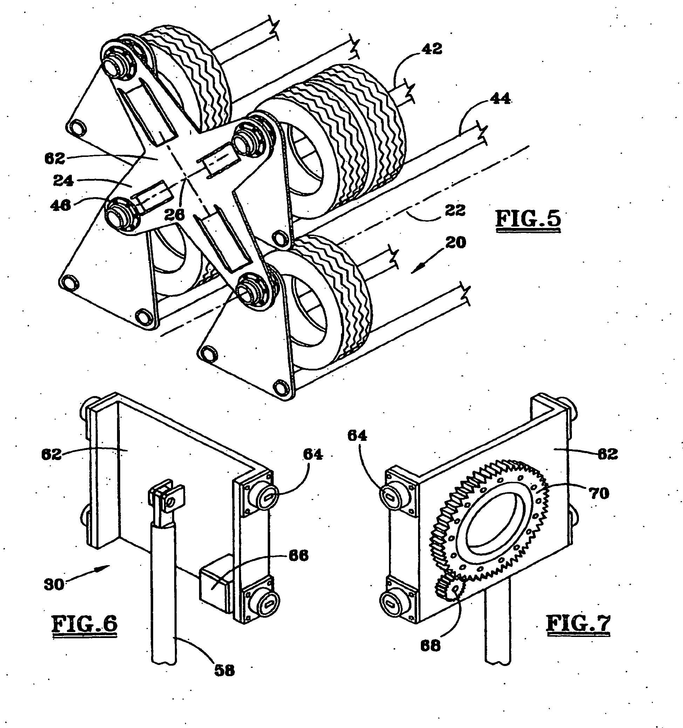

The trailer includes a trailer frame 12 having a central axis 14 which, as shown in Figure 3 is spaced between a left-side rear wheel 16 and a right-side rear wheel 18. As disclosed further below, the trailer frame supports a plurality of storage units 20, which for the embodiment depicted in Figure 1, is a plurality of tires. Each storage unit has a storage support axis 22 which is substantially parallel to the trailer central axis 14. A portion of the carriage assembly 24 is shown in Figure 5, and rotatably supports the plurality of tires about a carriage axis substantially parallel with the trailer central axis. A lift mechanism 30 as shown in Figure 6 is provided for raising and lowering the carriage and thereby the objects supported on the storage units with respect to the trailer frame.

For the embodiment as shown in Figure 1, the entirety of the carriage and the plurality of storage units are forward of the rear wheels of the trailer. A storage deck 40 is provided above the rear wheels for storing miscellaneous objects. As explained further below, the carriage assembly may be raised and lowered, so that when loading or unloading objects, the objects are desirably relatively close to the ground. As shown in Figure 1, the low position of the tires relative to the ground is achieved by providing a lower portion 36 of the trailer frame which is vertically below the centerline of the wheels 16, 18. In a preferred embodiment, the trailer frame supports moveable side panels 50, which may be lowered to be flush with the exterior of the frame during transport, as shown in Figure 3, but may be raised as shown in Figures 1 and 2 when the trailer is parked to allow for full viewing of the carriage operation.

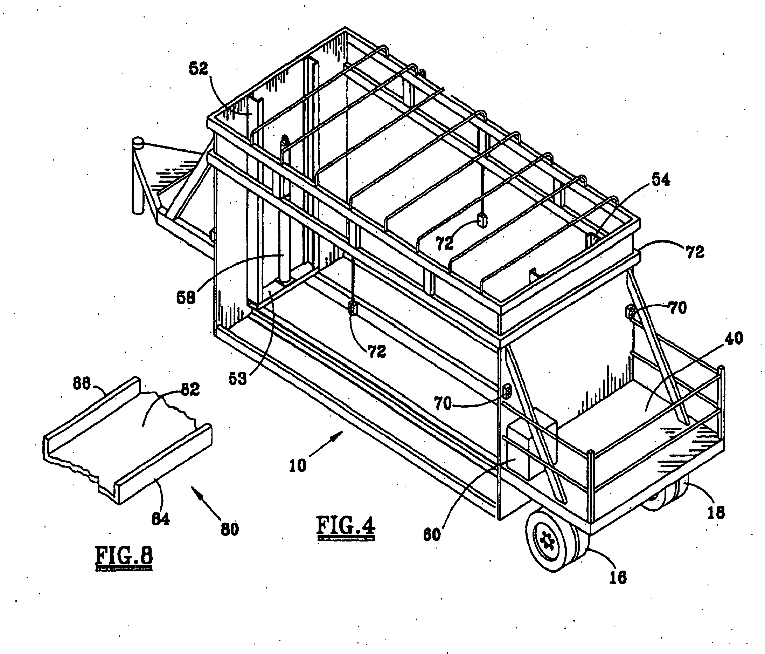

Figure 4 shows in further detail suitable components of the trailer 10. The frame 12 includes a pair of spaced apart front guides 52, with each guide suitably formed by a C-channel. A similar pair of rear guides 54 are also shown. These guides allow for the selective raising and lowering of the carriage by a pair of powered fluid cylinders 58. A lower portion of cylinder 58 is shown in Figure 4 between the pair of front guides 52 and resting on a frame guide base 53. Figure 4 also illustrates a suitable rear deck 40 for storage of miscellaneous components, including a power unit 60 for powering operation of the carriage assembly.

Figure 5 illustrates a portion of the carriage assembly 24 which, for the depicted embodiment, includes 4 storage units each having a central axis 22 so that the storage unit may rotate as a subassembly about pivot 46 with respect to rotatable carriage end plate 62. For handling tires, the storage unit may include rods or other elongate supports 42, 44 as shown in Figure 5, each extending between the spaced apart end plates 62 of the carriage assembly.

The carriage assembly 24 may be raised or lowered by a lift mechanism 30 including a pair of powered cylinders 58 and a guide plate 62 at the upper end of each cylinder. The moveable plate 62 includes a plurality of rollers or other suitable guides 64, which are guided by the front and rear supports for raising and lowering the carriage assembly.

Figure 6 also discloses a suitable drive unit 66, which may rotate gear 68 as shown in Figure 7, thereby driving gear 70. Gear 70 may then be secured to a respective end plate 60, so that operation of motor 66 controllably rotates the carousel assembly about its central axis 26. A similar drive assembly is provided at the other end of the carriage assembly for simultaneously raising or lowering the other end of the carousel.

Various controls 70, 72 may be provided at desired locations on the trailer, including the sides of the trailer where objects are loaded and unloaded onto and from the storage units, and at the rear of the trailer near the power unit 60. These controls may be regulated by an operator to slowly raise the carousel, thereby allowing activation of the motor 66 to rotate the carousel so that the desired storage rack with the objects to be unloaded and loaded may be positioned on the desired side of the trailer and close to the ground. These controls 70, 72, if desired, may rotate the carousel in either a clockwise or a counterclockwise direction. Safety circuits may be used to ensure that the carousel is not rotated until raised to a sufficient level so that the carousel can rotate without hitting the lower frame of the trailer.

The storage supports as disclosed herein comprise a plurality of racks which are free to rotate with respect to the carriage end plates. In most applications, three or more racks may be equally spaced circumferentially about the carriage. A significant feature of the carriage assembly is that it allows the operator to load or unload goods from either side of the trailer. In some applications, the right-side of the trailer may be blocked, yet the operator may easily and safety unload goods from the left-side of the trailer. At the next delivery spot, the operator has the flexibility of unloading from the left-side of the trailer when the right-side of the trailer is blocked.

Depending on the goods being transported, the rotatable carriage assembly may benefit significantly from a lift mechanism, as disclosed herein. In other applications, and particularly those wherein the goods are relatively light, such as goods transported in the snack food industry, a lift mechanism for raising and lowering the carriage may not be necessary.

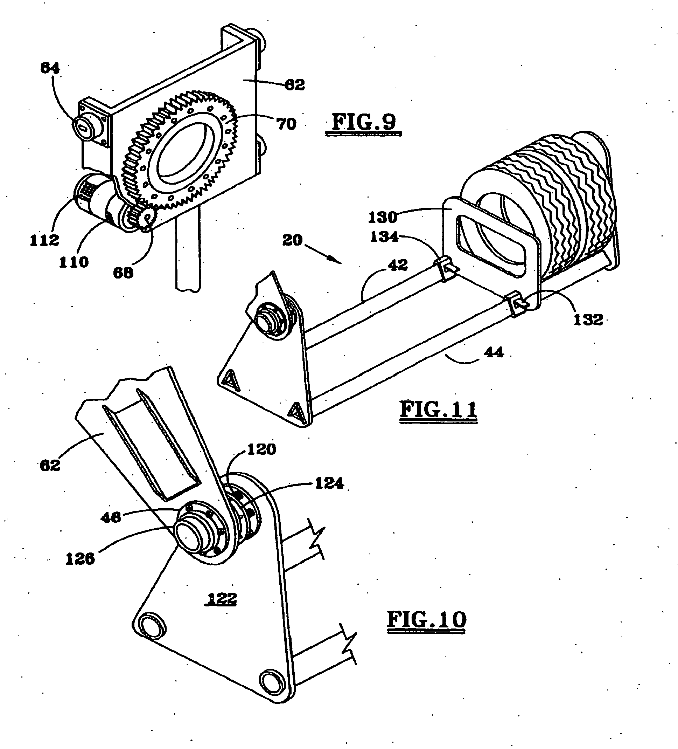

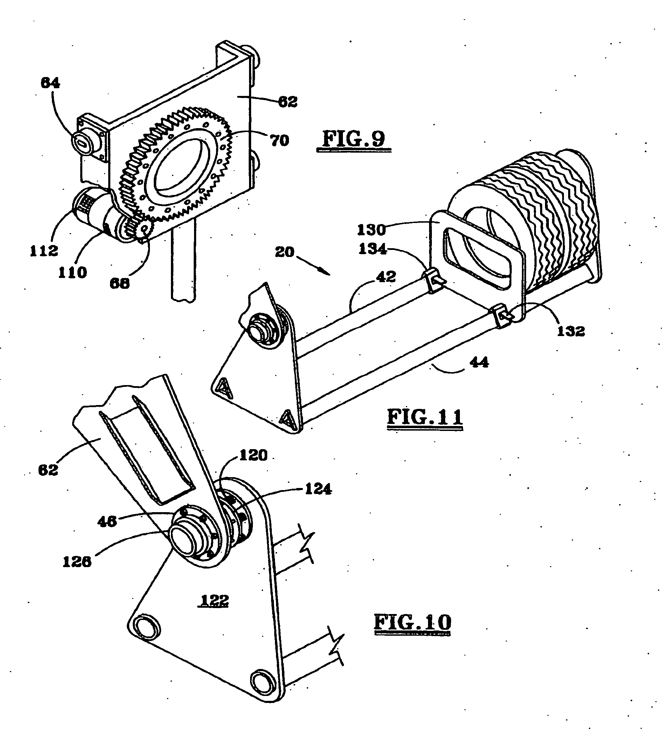

Referring now to Figure 9, a drive motor 110, which may be electrically powered, rotates the gear 68 and thereby the driving gear 70 to rotate the carriage assembly. The motor 110 may thus be powered to desirably position a selected carriage support near the ground surface and on the selected side of the trailer. Motor 110 may include a powered brake assembly 112 which desirably prohibits any substantial rotation of the carriage when power is not applied to the motor 110 to rotate the carriage. Brake 112 thus essentially assures that the carriage stays in a selected rotational position until motor 110 is activated. In one embodiment, a conventional switch may be used to sense when the doors 50 for on trailer are in the fully closed position. The brake 112 will remain activate to rotationally lock the position of the carriage anytime the doors 50 are fully closed. When the operator arrives at a site and opens one or both of the doors 50, that operation may be sensed by the switch, and the brake 112 deactivated so that the motor 110 may then be selectively activated. A suitable combination motor/brake is the Model 9 motor or output drive with an A2 Series spring biased parking brake sold by Auburn Gear, Inc.

Referring now to Figure 10, another type of powered brake, sometimes referred to herein as a powered restrictor, limits rotational movement of each carriage support relative to the carriage plates during transit of the trailer. In this case, the powered restrictor 120 may be positioned between carriage end plate 62 and a selected one of the generally triangular shaped plates 122 at one end of a respective storage support. An outer portion 124 of the powered restrictor 120 may thus be bolted or otherwise secured to the plate 62, and a short shaft 126 may be secured to the plate 122 and extend through the powered restrictor 120 and through the bearing assemblies on the plates 62 and 122. When activated, the powered restrictor 120 restricts or limits rotational movement of the shaft 126 relative to the plate 62, and thus restricts rotational movement of the plate 122 and the supports 42, 44 with respect to the carriage plate 62. A restrictor 120 thus prevent "rocking" of one of the rails 42, 44 and thus the goods supported thereon during transit of the trailer. By restricting rotational movement of a storage support with respect to a carriage plate 62, undesirable rocking of the carriage support may be eliminated when the trailer is in transit. Again, the powered restrictor 120 may be automatically activated any time both of the doors 50 are in the closed position, and may be automatically deactivated when one or both of the doors are in the open position. A suitable powered restrictor is the Model 38 restrictor or spring set holding brake sold by Dynacorp.

Figure 11 disclosed yet another feature of the invention, which feature is primarily designed to maintain objects supported on the carriage supports 42, 44 in a substantially upright position. A divider 130 is provided which is slidable along the pair of elongate supports 42, 44, which in this case may have a triangular cross-sectional configuration with an upper apex. The divider 130 may be temporarily secured with respect to the supports 42, 44 by one or more locking devices 134, which are secured to divider 130 and slide along the triangular supports 42, 44, and toggle lever 132 which moves from an unlock to a lock position. Triangular shaped notches in the divider 130 may thus ride on the upper surface of the triangular rails or supports. Alternatively, a sleeve may circumferentially surround each of the support members having a tubular configuration, and a T-shaped bolt may be used to lock the sleeve and thus the divider attached thereto in place. The operator may thus position the plate 130 against the objects stored on the support, and tighten the locking device 134 so that the objects, in this case the tires as shown in Figure 11, will remain in substantially their upright position.

The trailer as disclosed herein has two opposing side doors and a rear door, with the rear door typically being used to unload and load non-standard sized products. In other embodiments, the trailer may have only one side door, or a side door and a rear door. In yet other embodiments, two or more side doors may be provided on either side of the trailer and/or additional rear doors may be provided, particularly for long trailers.

The trailer as disclosed herein may be used for transporting various objects other than tires. Bottles of water may be transported in a similar manner to tires, and oils or other liquids may be transported in drums or boxes. A conventional shelf or tray rather than space rods may be used to support a plurality of boxes between the end plates, and such a support tray would be suitable for transporting vehicular batteries, package delivery boxes, and various products distributed to retail food stores, including produce, dairy products, cookies/crackers, bread, and potato chips. A tray 80 as shown in Figure 8 may extend between the end plates 62 replacing the purpose of the rods 42, 44. The tray 86 preferably having a base or floor 82, and sides 84, 86. The tray 86 may be suitably supported to hold to the weight of the goods between the end plates 62.

The term "trailer" as used herein refers to a trailer removably connected to a powered operator cab, whether termed a tractor, a truck, or a cab, and includes fifth wheel trailers and gooseneck trailers. A "trailer" also includes the trailer portion of cab/trailer combinations, whether detachable from the cab or integral with the cab. A conventional utility truck for delivery of parcels or bread is thus considered to include a trailer which is fixed to rather than removable from the cab. The trailer of the present invention offers the ability to sort various products for delivery or pickup, to load the goods curbside on either side of the trailer, and to handle heavy objects without significant lifting. A refrigerated trailer may be used for transporting dairy products, meat, or seafood.

Although specific embodiments of the invention have been described herein in some detail, this has been done solely for the purposes of explaining the various aspects of the invention, and is not intended to limit the scope of the invention as defined in the claims which follow. Those skilled in the art will understand that the embodiment shown and described is exemplary, and various other substitutions, alterations and modifications, including but not limited to those design alternatives specifically discussed herein, may be made in the practice of the invention without departing from its scope.

## Claims

1. A trailer (10) for transporting objects, comprising:
a trailer frame (12) having a central axis (14) spaced between a left-side rear wheel (16) and a right-side rear wheel (18), the trailer frame (12) having a side opening for access to the transported objects;
at least one movable side panel (50) supported on the trailer frame (12) and having a lower closed position to close the opening and an upper open position, the at least one movable side panel (50) when in the upper open position exposing the opening in the trailer frame (12) for access to the transported objects;
the trailer being **characterized by**:
a rotatable carriage (24) within the trailer frame (12) having a carriage axis (26) substantially parallel to the trailer frame axis (14), the carriage (24) being rotatable about the carriage axis (26); and
a plurality of storage supports (20) rotatably supported on the rotatable carriage (24) for simultaneous rotation about the carriage axis (26) to position a selected storage support (20) adjacent a side of the trailer frame (12) for loading and unloading objects when the at least one side panel (50) is in the open position, each storage support (20) supporting a plurality of objects thereon and having a storage support axis (22) substantially parallel to the trailer frame central axis (14);
wherein a lower portion (36) of the trailer frame (12) is below the centerline for the rear wheels (16, 18); and
the entirety of the rotatable carriage (24) and the plurality of storage supports (20) are forward of the rear wheels (16, 18).

2. A trailer as defined in Claim 1, further comprising:
a powered carriage rotator (110), and
a powered brake (112) for prohibiting rotation of the plurality of storage supports (20) about the carriage axis (26) when power is not applied to the carriage rotator (112).

3. A trailer as defined in Claim 1 or Claim 2, further comprising:
a lift mechanism (30) for raising and lowering the rotatable carriage (24) with respect to the trailer frame (12) and thereby the objects supported on the storage supports (20).

4. A trailer as defined in any preceding claim, further comprising:
a storage deck (40) above the rear wheels.

5. A trailer as defined in Claim 1, wherein said trailer frame (12) is supported on a trailer chassis and includes a pair of movable side panels (50) on opposing sides of the trailer frame central axis (14).

6. A trailer as defined in any preceding claim, wherein each storage support (20) comprises a pair of spaced apart elongate generally horizontal support members (42, 44).

7. A trailer as defined in Claim 6, wherein each support member includes a pivot (46) for rotating with respect to the rotatable carriage (24).

8. A trailer as defined in any preceding claim, further comprising:
a powered restrictor (120) for limiting the rotational movement of a storage support (20) during transit of the trailer (10).

9. A trailer as defined in Claim 8, wherein the powered restrictor (120) is provided for each of the plurality of storage supports (20).

10. A trailer as defined in any preceding claim, further comprising:
a divider (130) supported on a storage support (20) for supporting objects in a substantially upright position on the storage support (20).

11. A trailer as defined in Claim 10, wherein the divider (130) is slidably supported on each of the pair of elongate support members (42, 44).

12. A trailer as defined in Claim 10 or Claim 11, wherein the divider (130) may be temporarily locked in a fixed axial position relative to the pair of support members (42, 44).

13. A trailer as defined in any one of Claims 10 to 12 wherein the divider (130) is selectively positionable along substantially an entire length of the storage support (20).

14. A method of transporting and unloading objects, the method comprising the steps of:
providing a trailer frame (12) having a central axis (14) spaced between a left-side rear wheel (16) and a right-side rear wheel (18), the trailer frame (12) having a side opening for access to the transported objects; and
providing at least one movable side panel (50) supported on the trailer frame (12) and having a lower closed position to close the opening and an upper open position, the at least one movable side panel (50) when in the upper open position exposing the opening in the trailer frame (12) for access to the transported objects;
the method being **characterized by** the steps of:
providing a rotatable carriage (24) having a carriage axis (26) substantially parallel to the trailer frame central axis (14), the carriage (24) being rotatable about the carriage axis (26);
supporting a plurality of storage supports (20) on the carriage (24), each storage support (20) supporting a plurality of objects thereon, each storage support (20) having a storage support axis (22) substantially parallel to the trailer frame central axis (14) wherein a lower portion (36) of the trailer frame (12) is below the centerline for the rear wheels (16, 18) and the entirety of the rotatable carriage (24) and the plurality of storage supports (20) are forward of the rear wheels (16, 18); and
loading and unloading objects when the at least one side panel (50) is in the open position.

15. A method as defined in Claim 14, further comprising:
raising or lowering the carriage (24) and thereby the objects supported on the storage supports (20) with respect to the trailer frame (12).

16. A method as defined in Claim 14, further comprising:
providing a powered carriage rotator (110) for rotating the plurality of supports (20) about the carriage axis (26).

17. A method as defined in Claim 14, further comprising:
rotatably supporting the plurality of storage supports (20) about a carriage axis (26) substantially parallel with the trailer central axis (14).

18. A method as defined in Claim 14, wherein each storage support (20) is sized to receive a plurality of tires.

## Patentansprüche

1. Anhänger (10) zum Transportieren von Gegenständen, umfassend:
einen Anhängerrahmen (12) mit einer Mittelachse (14), die zwischen einem linksseitigen Hinterrad (16) und einem rechtsseitigen Hinterrad (18) beabstandet angeordnet ist, wobei der Anhängerrahmen (12) eine Seitenöffnung für den Zugriff auf die transportierten Gegenstände aufweist;
zumindest eine bewegbare Seitenwand (50), die an dem Anhängerrahmen (12) gelagert ist und eine untere, geschlossene Position zum Schließen der Öffnung und eine obere, offene Position aufweist, wobei die zumindest eine bewegbare Seitenwand (50), wenn sie sich in der oberen, offenen Position befindet, die Öffnung im Anhängerrahmen (12) für den Zugriff auf die transportierten Gegenstände freigibt;
wobei der Anhänger durch Folgendes **gekennzeichnet** ist:
innerhalb des Anhängerrahmens (12) ein drehbares Traggestell (24) mit einer Traggestellachse (26), die im Wesentlichen parallel zur Achse des Anhängerrahmens (14) ist, wobei das Traggestell (14) um die Traggestellachse (26) drehbar ist; und
eine Vielzahl an Lagerungsträgern (20), die drehbar auf dem drehbaren Traggestell (24) gelagert sind, zur gleichzeitigen Drehung um die Traggestellachse (26), um einen ausgewählten Lagerungsträger (20) benachbart zu einer Seite des Anhängerrahmens (12) zu platzieren, um Gegenstände ein- und auszuladen, wenn die zumindest eine Seitenwand (50) in der offenen Position ist, wobei jeder Lagerungsträger (20) mehrere Gegenstände trägt und jeder Lagerungsträger eine Lagerungsträgerachse (22) aufweist, die im Wesentlichen parallel zur Mittelachse des Anhängerrahmens (14) ist;
worin ein unterer Teil (36) des Anhängerrahmens (12) sich unterhalb der Mittellinie für die Hinterräder (16, 18) befindet; und
die Gesamtheit von drehbarem Traggestell (24) und der Vielzahl an Lagerungsträgern (20) sich weiter vorne befinden als die Hinterräder (16, 18).

2. Anhänger nach Anspruch 1, weiters umfassend:
eine angetriebene Traggestelldrehvorrichtung (110) und
eine angetriebene Bremse (112) zur Vermeidung der Drehung der Vielzahl an Lagerungsträgern (20) um die Traggestellachse (26), wenn keine Kraft auf die Traggestelldrehvorrichtung (112) angewandt wird.

3. Anhänger nach Anspruch 1 oder Anspruch 2, weiters umfassend:
einen Hebemechanismus (30) zum Heben und Senken des drehbaren Traggestells (24) und somit auch der Gegenstände, die von den Lagerungsträgern (20) getragen werden, relativ zu dem Anhängerrahmen (12).

4. Anhänger nach einem der vorangegangenen Ansprüche, weiters umfassend:
eine Lagerungstragfläche (40) oberhalb der Hinterräder.

5. Anhänger nach Anspruch 1, worin der Anhängerrahmen (12) an einem Anhängerchassis befestigt ist und ein Paar bewegbarer Seitenwände (50) an gegenüberliegenden Seiten der Mittelachse des Anhängerrahmens (14) umfasst.

6. Anhänger nach einem der vorangegangenen Ansprüche, worin jeder Lagerungsträger (20) ein Paar zueinander beabstandeter, länglicher, im Allgemeinen horizontaler Tragelemente (42, 44) umfasst.

7. Anhänger nach Anspruch 6, worin jedes Tragelement einen Zapfen (46) zum Drehen in Bezug zu dem drehbaren Traggestell (24) umfasst.

8. Anhänger nach einem der vorangegangenen Ansprüche, weiters umfassend:
eine angetriebene Drossel (120) zur Einschränkung der Drehbewegung eines Lagerungsträgers (20) während der Fahrt des Anhängers (10).

9. Anhänger nach Anspruch 8, worin die angetriebene Drossel (120) für jedes der Vielzahl an Lagerungsträgern bereitgestellt ist.

10. Anhänger nach einem der vorangegangenen Ansprüche, weiters umfassend:
eine Trennwand (130), die durch einen Lagerungsträger (20) gehalten wird, zum Halten von Gegenständen in im Wesentlichen aufrechter Position auf dem Lagerungsträger (20).

11. Anhänger nach Anspruch 10, worin die Trennwand (130) verschiebbar an jedem der beiden länglichen Tragelemente (42, 44) befestigt ist.

12. Anhänger nach Anspruch 10 oder Anspruch 11, worin die Trennwand (130) vorübergehend in einer fixierten axialen Position relativ zu dem Paar an Tragelementen (42, 44) arretiert sein kann.

13. Anhänger nach einem der Ansprüche 10 bis 12, worin die Trennwand (130) im Wesentlichen entlang der Gesamtlänge des Lagerungsträgers (20) positionierbar ist.

14. Verfahren zum Transportieren und Ausladen von Gegenständen, wobei das Verfahren die folgenden Schritte umfasst:
das Bereitstellen eines Anhängerrahmens (12) mit einer Mittelachse (14), die zwischen einem linksseitigen Hinterrad (16) und einem rechtsseitigen Hinterrad (18) beabstandet angeordnet ist, wobei der Anhängerrahmen (12) eine Seitenöffnung für den Zugriff auf die transportierten Gegenstände aufweist;
das Bereitstellen zumindest einer bewegbaren Seitenwand (50), die an dem Anhängerrahmen (12) gelagert ist und eine untere, geschlossene Position zum Schließen der Öffnung und eine obere, offene Position aufweist, wobei die zumindest eine bewegbare Seitenwand (50), wenn sie sich in der oberen, offenen Position befindet, die Öffnung im Anhängerrahmen (12) für den Zugriff auf die transportierten Gegenstände freigibt;
wobei das Verfahren durch folgende Schritte **gekennzeichnet** ist:
das Bereitstellen eines drehbaren Traggestells (24) mit einer Traggestellachse (26), die im Wesentlichen parallel zur Achse des Anhängerrahmens (14) ist, wobei das Traggestell (24) um die Traggestellachse (26) drehbar ist;
das Lagern einer Vielzahl an Lagerungsträgern (20) auf dem Traggestell (24), wobei auf jedem Lagerungsträger (20) mehrere Gegenstände aufliegen und jeder Lagerungsträger (20) eine Lagerungsträgerachse (22) aufweist, die im Wesentlichen parallel zur Mittelachse des Anhängerrahmens (14) ist, worin ein unterer Teil (36) des Anhängerrahmens (12) sich unterhalb der Mittellinie für die Hinterräder (16, 18) befindet; und die Gesamtheit von drehbarem Traggestell (24) und der Vielzahl an Lagerungsträgern (20) sich weiter vorne befinden als die Hinterräder (16, 18); und
das Ein- und Ausladen von Gegenständen, wenn die zumindest eine Seitenwand (50) sich in der offenen Position befindet.

15. Verfahren nach Anspruch 14, weiters umfassend:
das Heben oder Senken des Traggestells und somit auch der Gegenstände, die von den Lagerungsträgern (20) getragen werden, relativ zu dem Anhängerrahmen (12).

16. Verfahren nach Anspruch 14, weiters umfassend:
das Bereitstellen einer angetriebenen Traggestelldrehvorrichtung (110) zum Drehen der Vielzahl an Trägern (20) um die Traggestellachse (26).

17. Verfahren nach Anspruch 14, weiters umfassend:
das drehbare Lagern der Vielzahl an Lagerungsträgern (20) um eine Traggestellachse (26), die sich im Wesentlichen parallel zur Mittelachse des Anhängers (14) befindet.

18. Verfahren nach Anspruch 14, worin jeder Lagerungsträger (20) so groß ist, dass es mehrere Reifen aufnehmen kann.

## Revendications

1. Remorque (10) pour transporter des objets, comprenant :
un châssis de remorque (12) ayant un axe central (14) espacé entre une roue arrière gauche (16) et une roue arrière droite (18), le châssis de remorque (12) ayant une ouverture latérale pour l'accès aux objets transportés ;
au moins un panneau latéral mobile (50) supporté sur le châssis de remorque (12) et ayant une position fermée inférieure pour fermer l'ouverture et une position ouverte supérieure, le au moins un panneau latéral mobile (50) lorsqu'il est dans la position ouverte supérieure exposant l'ouverture dans le châssis de remorque (12) pour l'accès aux objets transportés ;
la remorque étant **caractérisée par** :
un chariot rotatif (24) à l'intérieur du châssis de remorque (12) ayant un axe de chariot (26) sensiblement parallèle à l'axe de châssis de remorque (14), le chariot (24) pouvant tourner autour de l'axe de chariot (26) ; et
une pluralité de supports de stockage (20) supportés de manière rotative sur le chariot rotatif (24) pour la rotation simultanée autour de l'axe de chariot (26) pour positionner un support de stockage (20) sélectionné adjacent à un côté du châssis de remorque (12) pour charger et décharger les objets lorsque le au moins un panneau latéral (50) est dans la position ouverte, chaque support de stockage (20) supportant une pluralité d'objets sur ce dernier et ayant un axe de support de stockage (22) sensiblement parallèle à l'axe central de châssis de remorque (14) ;
dans laquelle une partie inférieure (36) du châssis de remorque (12) est au-dessous de l'axe central des roues arrière (16, 18) ; et
la totalité du chariot rotatif (24) et la pluralité de supports de stockage (20) sont à l'avant des roues arrière (16, 18).

2. Remorque selon la revendication 1, comprenant en outre :
un rotateur de chariot motorisé (110), et
un frein motorisé (112) pour empêcher la rotation de la pluralité de supports de stockage (20) autour de l'axe de chariot (26) lorsque l'énergie n'est pas appliquée sur le rotateur de chariot (112).

3. Remorque selon la revendication 1 ou la revendication 2, comprenant en outre :
un mécanisme de levage (30) pour lever et abaisser le chariot rotatif (24) par rapport au châssis de remorque (12) et ainsi les objets supportés sur les supports de stockage (20).

4. Remorque selon l'une quelconque des revendications précédentes, comprenant en outre :
un pont de stockage (40) au-dessus des roues arrière.

5. Remorque selon la revendication 1, dans laquelle ledit châssis de remorque (12) est supporté sur un cadre de remorque et comprend une paire de panneaux latéraux mobiles (50) sur les côtés opposés de l'axe central de châssis de remorque (14).

6. Remorque selon l'une quelconque des revendications précédentes, dans laquelle chaque support de stockage (20) comprend une paire d'éléments de support (42, 44) espacés, allongés, généralement horizontaux.

7. Remorque selon la revendication 6, dans laquelle chaque élément de support comprend un pivot (46) pour tourner par rapport au chariot rotatif (24).

8. Remorque selon l'une quelconque des revendications précédentes, comprenant en outre :
un limiteur motorisé (120) pour limiter le mouvement de rotation d'un support de stockage (20) pendant le transit de la remorque (10).

9. Remorque selon la revendication 8, dans laquelle le limiteur motorisé (120) est prévu pour chacun de la pluralité de supports de stockage (20).

10. Remorque selon l'une quelconque des revendications précédentes, comprenant en outre :
un diviseur (130) supporté sur un support de stockage (20) pour supporter des objets dans une position sensiblement droite sur le support de stockage (20).

11. Remorque selon la revendication 10, dans laquelle le diviseur (130) est supporté de manière coulissante sur chacun de la paire d'éléments de support (42, 44) allongés.

12. Remorque selon la revendication 10 ou la revendication 11, dans laquelle le diviseur (130) peut être bloqué temporairement dans une position axiale fixe par rapport à la paire d'éléments de support (42, 44).

13. Remorque selon l'une quelconque des revendications 10 à 12, dans laquelle le diviseur (130) peut être sélectivement positionné sensiblement le long de toute la longueur du support de stockage (20).

14. Procédé pour transporter et décharger des objets, le procédé comprenant les étapes consistant à :
prévoir un châssis de remorque (12) ayant un axe central (14) espacé entre une roue arrière gauche (16) et une roue arrière droite (18), le châssis de remorque (12) ayant une ouverture latérale pour avoir accès aux objets transportés ; et
prévoir au moins un panneau latéral mobile (50) supporté sur le châssis de remorque (12) et ayant une position fermée inférieure pour fermer l'ouverture et une position ouverte supérieure, le au moins un panneau latéral mobile (50) lorsqu'il est dans la position ouverte supérieure, exposant l'ouverture dans le châssis de remorque (12) pour avoir accès aux objets transportés ;
le procédé étant **caractérisé par** les étapes consistant à :
prévoir un chariot rotatif (24) ayant un axe de chariot (26) sensiblement parallèle à l'axe central (14) de châssis de remorque, le chariot (24) pouvant tourner autour de l'axe de chariot (26) ;
supporter une pluralité de supports de stockage (20) sur le chariot (24), chaque support de stockage (20) supportant une pluralité d'objets sur ce dernier, chaque support de stockage (20) ayant un axe de support de stockage (22) sensiblement parallèle à l'axe central (14) de châssis de remorque, dans lequel une partie inférieure (36) du châssis de remorque (12) est au-dessous de l'axe central pour les roues arrière (16, 18) et la totalité du chariot rotatif (24) et la pluralité de supports de stockage (20) sont à l'avant des roues arrière (16, 18) ; et
charger et décharger des objets lorsque le au moins un panneau latéral (50) est dans la position ouverte.

15. Procédé selon la revendication 14, comprenant en outre l'étape consistant à :
lever ou abaisser le chariot (24) et ainsi les objets supportés sur les supports de stockage (20) par rapport au châssis de remorque (12).

16. Procédé selon la revendication 14, comprenant en outre l'étape consistant à :
prévoir un rotateur de chariot motorisé (110) pour faire tourner la pluralité de supports (20) autour de l'axe de chariot (26).

17. Procédé selon la revendication 14, comprenant en outre l'étape consistant à :
supporter de manière rotative la pluralité de supports de stockage (20) autour d'un axe de chariot (26) sensiblement parallèle à l'axe central (14) de la remorque.

18. Procédé selon la revendication 14, dans lequel chaque support de stockage (20) est dimensionné pour recevoir une pluralité de pneus.
